# EUROPÄISCHE PATENTSCHRIFT

(11) **EP 3 696 252 B1**
(45) Veröffentlichungstag und Bekanntmachung des Hinweises auf die Patenterteilung: **17.11.2021**
(21) Anmeldenummer: 19156568.8
(22) Anmeldetag: 12.02.2019
(51) Int. Cl.: C10L 1/185

(54) **BENZYLHEMIFORMAL-HALTIGE BIODIESELMISCHUNGEN**
BENZYLHEMIFORMAL-CONTAINING BIODIESEL COMPOUNDS
MÉLANGES DE BIODIESEL CONTENANT DU BENZYLHÉMIFORMAL

(43) Veröffentlichungstag der Anmeldung: 19.08.2020
(73) Patentinhaber: LANXESS Deutschland GmbH, 50569 Köln (DE)
(72) Erfinder: WACHTLER, Peter, 47800 Krefeld (DE)

(56) Entgegenhaltungen:
- WO-A1-2004/040979
- ZA-B- 8 409 811
- Lanxess: "Preventol D2 Produkt-Information", , 28. März 2011 (2011-03-28), Seiten 1-7, XP55603756, Gefunden im Internet: URL:http://www.prechel-gmbh.de/pdf/Biozide /Preventol_D_2.pdf [gefunden am 2019-07-09]

## Beschreibung

Die Erfindung betrifft Benzylhemiformal-haltige Biodieselmischungen, ein Verfahren zu ihrer Herstellung, deren Verwendung zur Stabilisierung von Dieselkraftstoffen gegen Mikroorganismen sowie entsprechende stabilisierte Dieselkraftstoffe.

Da der Einsatz von Biodiesel in jüngster Zeit als gesetzlich vorgeschriebener Zusatz in Dieselkraftstoffen für Automobile immer mehr an Bedeutung gewonnen hat, hat im entsprechenden Maße auch die Produktion und der Vertrieb von mit Biodiesel versetztem Petrodiesel, sogenannte B5, B10 oder B20 Dieselkraftstoffe, wobei die nachgestellte Zahl für den Biodieselanteil in Vol.-% steht, in den letzten Jahren immer mehr zugenommen. Ein Nachteil insbesondere der B5 - B20 Dieselkraftstoffe gegenüber herkömmlichem Dieselkraftstoff auf rein petrochemischer Basis ist die geringere mikrobiologische Lagerstabilität dieser Gemische, da diese im Vergleich zu Petrodiesel leichter von Mikroorganismen angegriffen werden können und es infolgedessen zu unerwünschten Erscheinungen wie Schleimbildung oder Pilzwachstum kommen kann. Die als Folge des Mikroorganismenwachstums ausgeschiedene Biomasse kann dann z.B. Filter von Pumpen oder Motoren verstopfen und zu Stillständen und Maschinenausfallzeiten sowie ggf. teuren Reparaturen führen. Ausgeschiedene Stoffwechselprodukte wie z.B. Säuren können weiterhin empfindliche Bauteile wie z.B. Einspritzsysteme, Pumpen und Düsen von Dieselmotoren korrodieren. Dadurch wird die Funktionsfähigkeit, Lebensdauer und Leistungsfähigkeit des Dieselmotors erheblich eingeschränkt. Alle diese Abbauprodukte sollen in B5 - B20 Dieselkraftstoffen nicht vorhanden sein.

Der Einsatz des alternativen Energieträgers Biodiesel aus nachwachsenden Rohstoffen als Bestandteil in Dieselkraftstoffen für Automobile macht daher die Erhöhung der mikrobiologischen Lagerstabilität, insbesondere von B5 - B20 Dieselkraftstoffen unbedingt erforderlich.

Die Patentanmeldungen ZA8409811 und WO2004/040979 beschreiben die Verwendung von BHF zur Stabilisierung von Dieselkraftstoff gegen Mikroorganismen.

Im Gegensatz zum beschriebenen Einsatz von BHF in Biodiesel erweist sich die Zugabe von BHF zu herkömmlichen Dieselkraftstoff der Petrodiesel mit üblicherweise bis zu 7 Vol.-% Biodiesel enthält als schwieriger durchzuführen. Zwar sind BHF Mischungen mit BIT (1,2-Benzisothiazolinon) bereits in WO2004/040979 auch für den Einsatz in Petrodiesel genannt, aber BHF ist bei Raumtemperatur eine Flüssigkeit, die sich nur schlecht in Petrodiesel löst. Bei Versuchen, BHF in Petrodiesel einzuarbeiten wurde festgestellt, dass die Löslichkeit von BHF in Petrodiesel deutlich geringer ist als die Löslichkeit von BHF in Biodiesel. Ein ausreichender Schutz ist mit den erzielbaren Löslichkeiten daher nicht immer gewährleistet.

Das gilt auch für die oben beschriebenen B5 bis B20 Dieselkraftstoffe mit, obwohl diese Biodiesel bereits enthalten.

Aufgabe der vorliegenden Erfindung war es daher, ein Verfahren zu finden, das die Einarbeitung von BHF in Dieselkraftstoffe erlaubt, so dass auch dieser in einem ausreichenden Maße vor dem Angriff schädlicher Mikroorganismen wie Bakterien, Schimmel oder Hefen geschützt ist. Gefunden wurde nun, dass BHF in Dieselkraftstoffe leichter eingearbeitet werden kann, wenn man dazu eine BHF/Biodiesel-Mischung verwendet.

Die Erfindung betrifft daher eine Mischung, enthaltend
a) 40 bis 90 Gew.-%, insbesondere von 60 bis 85 Gew.-% Biodiesel, und
b) 10 bis 60 Gew.-%, insbesondere 15 bis 40 Gew.-% Benzylhemiformal.

### Komponente a)

Unter "Biodiesel" werden insbesondere alle als Biodiesel einsetzbaren gesättigten und ungesättigten Fettsäuren, Fettsäurealkylester, insbesondere Fettsäuremethylester (FAME) verstanden, wie sie üblicherweise unter dem Begriff Biodiesel für den Einsatz als Kraftstoff in Automobilen angeboten werden. Biodiesel kann darüber hinaus alle üblichen Zusatzstoffe, wie sie z. B. zur Erhöhung der Winterstabilität von Biodiesel zugesetzt werden, enthalten. Bevorzugter Biodiesel enthält wenigstens 96,5 Gew.-% an Fettsäuremethylester. Bevorzugter Biodiesel hat einen Flammpunkt von wenigstens 101 °C.

Insbesondere enthält die erfindungsgemäße Mischung Biodiesel in einer Menge von 60 bis 85 Gew.-%. Bevorzugt enthält die erfindungsgemäße Mischung die Komponenten a) und b) in einer Menge von 99 ― 100 Gew.-%, bezogen auf die erfindungsgemäße Mischung.

### Komponente b)

Unter "Benzylhemiformal" oder auch als "BHF" abgekürzt wird der biozide Wirkstoff gemäß Formel (I) verstanden.

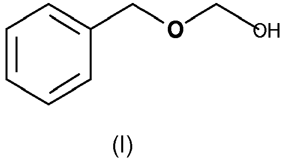

Bevorzugt enthält die erfindungsgemäße Mischung als Biozid das Benzylhemiformal in einer Menge von mehr als 95 Gew.-%, insbesondere mehr als 99 Gew.-%, bezogen auf die Gesamtmenge an Biozid in der erfindungsgemäßen Mischung. Ganz besonders bevorzugt, enthält die erfindungsgemäße Mischung Benzylhemiformal als einziges Biozid.

### Herstellung

Die Erfindung betrifft weiterhin ein Verfahren zur Herstellung der erfindungsgemäßen Mischung, dadurch gekennzeichnet, dass man Benzylhemiformal in Biodiesel löst. Bevorzugt wird das Benzylhemiformal dabei bei einer Temperatur von 20 bis 30 °C unter Rühren mit Biodiesel vermischt. Im Übrigen gelten für das Verfahren auch die für die Mischung angegeben Vorzugsbereiche.

### Verwendung

Die Erfindung betrifft zudem die Verwendung der erfindungsgemäßen Mischung zur Stabilisierung von Dieselkraftstoffen gegen Mikroorganismen.

Unter Dieselkraftstoff wird vorzugsweise ein Petrodiesel-haltiger Kraftstoff verstanden, der bis zu 26 Gew.-%, vorzugsweise von 0 bis 20 Gew.-%, insbesondere von 1 bis 9 Gew.-%, besonders bevorzugt von 2 bis 9 Gew.-% an Biodiesel enthalten kann. In einer Biodieselarmen Alternative umfasst der Dieselkraftstoff vorzugsweise einen Petrodiesel-haltigen Kraftstoff mit weniger als 2 Gew.-%, insbesondere weniger als 1 Gew.-%, ganz besonders bevorzugt weniger als 0,5 Gew.-% an Biodiesel.

Unter "Petrodiesel" werden insbesondere alle aus Kohlenwasserstoffen des Rohöls hergestellten Qualitäten verstanden, insbesondere die, die im Bereich von 170 bis 390°C sieden. Bevorzugt genügt der Petrodiesel der Spezifikation gemäß DIN EN 590. Bevorzugt besitzt der Petrodiesel eine Cetanzahl von > 51. Insbesondere besteht der Petrodiesel aus C₉-C₂₂ Kohlenwasserstoffen.

Vorzugsweise wird die erfindungsgemäße Mischung dem zu stabilisierenden Dieselkraftstoff in einer Menge von 0,005 bis 10 Gew.-%, bevorzugt 0,05 bis 5 Gew.-%, besonders bevorzugt 0,05 bis 2,0 Gew.-%, bezogen auf die Menge an stabilisiertem Dieselkraftstoff, zudosiert. Im Vergleich zu nicht-stabilisiertem Dieselkraftstoff trägt der erfindungsgemäß mit BHF stabilisierte Dieselkraftstoff erheblich dazu bei, dass die daraus hergestellten B5 - B 20 Dieselkraftstoffe bei der Distribution und Lagerung sowie in den Tankstellen längere Zeit stabiler sind gegen den Befall durch Mikroorganismen. Das BHF liegt in dem stabilisierten Dieselkraftstoff gelöst vor.

Für die Stabilisierung wird die erfindungsgemäße Mischung vorzugsweise mit dem Dieselkraftstoff vermischt, insbesondere kommt dabei die Mischung in einer Menge zum Einsatz, dass die Menge an Benzylhemiformal wenigstens 0,02 Gew.-%, insbesondere wenigstens 0,03 Gew.-%, vorzugsweise von 0,02 bis 0.2 Gew.-%, insbesondere von 0,03 bis 0.2 Gew.-%, bezogen auf den Dieselkraftstoff, beträgt.

Dem Dieselkraftstoff kann, sofern er noch keine Biodiesel-Anteile enthält vor oder vorzugsweise nach der Zugabe der erfindungsgemäßen Mischung noch Biodiesel zugegeben werden.

Auch nach längerer Zeit sind überraschenderweise keine Ausscheidungen von BHF nach Einarbeitung in dem zu schützenden Dieselkraftstoff festzustellen.

### Diesel kraftstoff

Die Erfindung betrifft weiterhin einen Dieselkraftstoff enthaltend die erfindungsgemäße Mischung definiert in wenigstem einen der Ansprüche 1 bis 3, wobei der Dieselkraftstoff enthält:
i) wenigstens 200 ppm, insbesondere wenigstens 0,03 Gew.-%, Benzylhemiformal und
ii) 0,18 bis 26 Gew.-%, insbesondere 0,27 bis 26 Gew.-%, vorzugsweise bis 20 Gew.-%, insbesondere von 1 bis 9 Gew.-%, besonders bevorzugt von 2 bis 9 Gew.-% Biodiesel.

Bevorzugt enthält der erfindungsgemäße Dieselkraftstoff wenigstens 0,02 bis 0,2 Gew.-%, insbesondere 0,03 bis 0.2 Gew.-% an Benzylhemiformal.

Bevorzugt enthält der erfindungsgemäße Dieselkraftstoff als Biozid Benzylhemiformal in einer Menge von wenigstens 95 Gew.-%, insbesondere von wenigstens 99 Gew.-%, bezogen auf die Gesamtmenge an Biozid.

Insbesondere enthält der erfindungsgemäße Dieselkraftstoff Petrodiesel und Biodiesel in einer Gesamtmenge von größer 98 Gew.-%, bezogen auf den Dieselkraftstoff, vorzugsweise enthält er Petrodiesel, Biodiesel und Benzylhemiformal in einer Gesamtmenge von größer 99 Gew.-%, bezogen auf den Dieselkraftstoff.

Die Erfindung betrifft weiterhin einen Dieselkraftstoff, enthaltend die erfindungsgemäße Mischung, wobei der Gehalt an Benzylhemiformal 0,02 bis 0,2 Gew.-% und der Gehalt an Biodiesel kleiner gleich 1,8 Gew.-% beträgt, jeweils bezogen auf den Dieselkraftstoff.

### Beispiele

### 1) Benzylhemiformal - Löslichkeit in Petrodiesel ohne Biodieselanteil

Unter Rühren wurde BHF in 0,01 % Schritten mit Petrodiesel vermischt. Es wurden folgende Löslichkeiten von BHF in Petrodiesel ermittelt:

**Tab. 1 Löslichkeit von Benzylhemiformal in Petrodiesel 100 %**

| **[%] BHF** | |
|---|---|
| 0,01 | klar gelöst |
| 0,02 | Klar gelöst |
| 0,03 | ungelöste Anteile |
| 0,04 | ungelöste Anteile |

Wie der Tabelle entnommen werden kann, lässt sich BHF in unverdünntem Zustand in einer Menge von bis zu ca. 200 ppm klar in Petrodiesel einarbeiten. Bei Zugabe größerer Mengen sind Tröpfchen von nicht gelöstem Benzylhemiformal zu beobachten, die sich auch nach einigen Stunden noch nicht aufgelöst hatten. Für den Fall, dass höhere Mengen an BHF in Petrodiesel schnell eingearbeitet werden sollen, wie das z.B. anlässlich eines akuten Mikroorganismenbefall vorkommen kann, ist diese Art der Einarbeitung in der Praxis daher nicht geeignet.

### 2) Benzylhemiformal - Löslichkeit in B 7 Dieselkraftstoff (Petrodiesel mit 7 Vol.% Biodiesel)

**Tab. 2 Löslichkeit von Benzylhemiformal in B 7 Dieselkraftstoff**

| **[%] BHF** | |
|---|---|
| 0,01 | klar gelöst |
| 0,02 | Klar gelöst |
| 0,03 | ungelöste Anteile |
| 0,04 | ungelöste Anteile |

Wie der Tabelle entnommen werden kann, lässt sich BHF in unverdünntem Zustand in einer Menge von bis zu ca. 200 ppm klar in B 7 Dieselkraftstoff einarbeiten. Bei Zugabe größerer Mengen sind Tröpfchen von nicht gelöstem Benzylhemiformal zu beobachten, die sich auch nach einigen Stunden noch nicht aufgelöst hatten. Für den Fall, dass höhere Mengen an BHF in den Dieselkraftstoff eingearbeitet werden sollen, wie das z.B. anlässlich eines akuten Mikroorganismenbefall vorkommen kann, ist diese Art der Einarbeitung in der Praxis daher nicht geeignet.

### 3) Benzylhemiformal Stammlösung in Biodiesel - Löslichkeit in Petrodiesel

Unter Rühren wurde eine 20 %-ige BHF Stammlösung in Biodiesel in 0,05 % Schritten mit Petrodiesel (ohne Biodiesel) vermischt. Es wurden folgende Löslichkeiten ermittelt:

**Tab.3 Löslichkeit einer BHF Stammlösung (20 %-ig) in Petrodiesel ohne Biodieselanteil**

| **Zugabe BHF Stammlösung [%]** | **BHF in Petrodiesel [%]** | |
|---|---|---|
| 0,05 | 0,01 | klar gelöst |
| 0,10 | 0,02 | klar gelöst |
| 0,25 | 0,05 | klar gelöst |
| 0,5 | 0,1 | klar gelöst |
| 1,0 | 0,2 | klar gelöst |

Wie der Tabelle entnommen werden kann , lässt sich die BHF Stammlösung in solchen Mengen klar und gut gelöst in Petrodiesel einarbeiten, dass dadurch wesentlich höhere Mengen an reinem BHF im Petrodiesel enthalten sind als das bei Einarbeitung von reinem BHF möglich wäre.

Auf diese Weise gelingt es, solche Mengen von BHF in Petrodiesel einzuarbeiten, dass hierdurch eine effiziente Behandlung bereits befallener Kraftstoffe erfolgen kann. Weiterhin lassen sich größere Mengen BHF vorbeugend in Petrodiesel einarbeiten, in denen es zu einer voraussichtlich längeren Lagerzeit des Kraftstoffs kommen wird.

Ein ähnliches Ergebnis konnte auch bei der Einarbeitung der obigen Stammlösung in den Dieselkraftstoff B7 erzielt werden.

## Patentansprüche

1. Mischung, enthaltend
a) 40 bis 90 Gew.-%, insbesondere von 60 bis 85 Gew.-% Biodiesel, und
b) 10 bis 60 Gew.-%, insbesondere 15 bis 40 Gew.-% Benzylhemiformal.

2. Mischung gemäß Anspruch 1, enthaltend die Komponenten a) und b) in einer Menge von 99 -100 Gew.-%, bezogen auf die Mischung.

3. Mischung gemäß wenigstens einem der Ansprüche 1 bis 2, enthaltend als Biozid das Benzylhemiformal in einer Menge von mehr als 95 Gew.-%, insbesondere mehr als 99 Gew.-%, bezogen auf die Gesamtmenge an Biozid in der Mischung, bevorzugt enthaltend Benzylhemiformal als einziges Biozid.

4. Verfahren zur Herstellung einer Mischung nach wenigstens einem der Ansprüche 1 bis 3, **dadurch gekennzeichnet, dass** man Benzylhemiformal in Biodiesel löst.

5. Verwendung der Mischung nach wenigstens einem der Ansprüche 1 bis 3 zur Stabilisierung von Dieselkraftstoff gegen Mikroorganismen.

6. Verwendung gemäß Anspruch 5 zur Stabilisierung eines Dieselkraftstoffes mit einem Biodieselanteil von bis zu 26 Gew.-%, vorzugsweise von 0 bis 26 Gew.-%, insbesondere von 1 bis 9 Gew.-%, besonders bevorzugt von 2 bis 9 Gew.-%.

7. Verwendung gemäß Anspruch 5 zur Stabilisierung eines Dieselkraftstoffes mit einem Biodieselanteil von mit weniger als 2 Gew.-%, insbesondere weniger als 1 Gew.-%, ganz besonders bevorzugt weniger als 0,5 Gew.-% an Biodiesel.

8. Dieselkraftstoff, enthaltend die Mischung nach wenigstem einen der Ansprüche 1 bis 3, wobei der Dieselkraftstoff enthält:
i) wenigstens 200 ppm, insbesondere wenigstens 0,03 Gew.-%, Benzylhemiformal und
ii) 0,18 bis 26 Gew.-% Biodiesel.

9. Dieselkraftstoff, enthaltend die Mischung nach wenigstem einen der Ansprüche 1 bis 3, wobei der Gehalt an Benzylhemiformal 0,02 bis 0,2 Gew.-% und der Gehalt an Biodiesel kleiner gleich 1,8 Gew.-% beträgt, jeweils bezogen auf den Dieselkraftstoff.

## Claims

1. Mixture, comprising
a) 40% to 90% by weight, in particular from 60% to 85% by weight of biodiesel, and
b) 10% to 60% by weight, in particular 15% to 40% by weight of benzyl hemiformal.

2. Mixture according to Claim 1, comprising components a) and b) in an amount of 99-100% by weight, based on the mixture.

3. Mixture according to at least one of Claims 1 and 2, comprising, as biocide, benzyl hemiformal in an amount of more than 95% by weight, in particular more than 99% by weight, based on the total amount of biocide in the mixture, preferably comprising benzyl hemiformal as the sole biocide.

4. Process for producing a mixture according to at least one of Claims 1 to 3, **characterized in that** benzyl hemiformal is dissolved in biodiesel.

5. Use of the mixture according to at least one of Claims 1 to 3 for the stabilization of diesel fuel against microorganisms.

6. Use according to Claim 5 for the stabilization of a diesel fuel having a biodiesel content of up to 26% by weight, preferably from 0% to 26% by weight, in particular from 1% to 9% by weight, particularly preferably from 2% to 9% by weight.

7. Use according to Claim 5 for the stabilization of a diesel fuel having a biodiesel content of less than 2% by weight, in particular less than 1% by weight, very particularly preferably less than 0.5% by weight of biodiesel.

8. Diesel fuel comprising the mixture according to at least one of Claims 1 to 3, wherein the diesel fuel comprises:
i) at least 200 ppm, in particular at least 0.03% by weight, of benzyl hemiformal and
ii) 0.18% to 26% by weight of biodiesel.

9. Diesel fuel comprising the mixture according to at least one of Claims 1 to 3, wherein the content of benzyl hemiformal is 0.02% to 0.2% by weight and the content of biodiesel is less than or equal to 1.8% by weight, based in each case on the diesel fuel.

## Revendications

1. Mélange contenant
a) 40 à 90 % en poids, en particulier 60 à 85 % en poids d'un biodiesel, et
b) 10 à 60 % en poids, en particulier 15 à 40 % en poids de benzylhémiformal.

2. Mélange selon la revendication 1, contenant les composants a) et b) en une quantité de 99 à 100 % en poids par rapport au mélange.

3. Mélange selon au moins l'une des revendications 1 à 2, contenant comme biocide le benzylhémiformal en une quantité supérieure à 95 % en poids, en particulier supérieure à 99 % en poids, par rapport à la quantité totale de biocide dans le mélange, contenant de préférence du benzylhémiformal comme biocide unique.

4. Procédé de fabrication d'un mélange selon au moins l'une des revendications 1 à 3, **caractérisé en ce qu'**on dissout du benzylhémiformal dans un biodiesel.

5. Utilisation du mélange selon au moins l'une des revendications 1 à 3 pour stabiliser un carburant diesel vis-à-vis des microorganismes.

6. Utilisation selon la revendication 5 pour stabiliser un carburant diesel ayant une teneur en biodiesel allant jusqu'à 26 % en poids, de préférence de 0 à 26 % en poids, en particulier de 1 à 9 % en poids, d'une manière particulièrement préférée de 2 à 9 % en poids.

7. Utilisation selon la revendication 5 pour stabiliser un carburant diesel ayant une teneur en biodiesel inférieure à 2 % en poids, en particulier inférieure à 1 % en poids, d'une manière tout particulièrement préférée inférieure à 0,5 % en poids de biodiesel.

8. Carburant diesel, contenant le mélange selon au moins l'une des revendications 1 à 3, le carburant diesel contenant :
i) au moins 200 ppm, en particulier au moins 0,03 % en poids de benzylhémiformal et
ii) 0,18 à 26 % en poids d'un biodiesel.

9. Carburant diesel, contenant le mélange selon au moins l'une des revendications 1 à 3, la teneur en benzylhémiformal étant de 0,02 à 0,2 % en poids et la teneur en biodiesel étant inférieure ou égale à 1,8 % en poids, dans chaque cas par rapport au carburant diesel.
